Europäisches Patentamt

European Patent Office

Office européen des brevets

(11) Veröffentlichungsnummer : **0 009 833**
**B1**

(12) **EUROPÄISCHE PATENTSCHRIFT**

(45) Veröffentlichungstag der Patentschrift :
**11.05.83**

(51) Int. Cl.³ : **G 01 G 17/02, G 01 G 13/08,**
**B 65 B 1/34**

(21) Anmeldenummer : **79200512.6**

(22) Anmeldetag : **15.09.79**

(54) **Einrichtung zum Abwägen von Tabakportionen.**

(30) Priorität : **28.09.78 DE 2842327**
**16.08.79 DE 2933275**

(43) Veröffentlichungstag der Anmeldung :
**16.04.80 Patentblatt 80/08**

(45) Bekanntmachung des Hinweises auf die Patenterteilung : **11.05.83 Patentblatt 83/19**

(84) Benannte Vertragsstaaten :
**BE CH FR GB NL**

(56) Entgegenhaltungen :
**BE A 431 450**
**CH A 255 586**
**DE A 2 624 774**
**DE C 800 151**
**FR A 2 206 498**
**FR A 2 282 105**
**FR A 2 368 022**

(73) Patentinhaber : **Technical Development Corporation**
**Schulstrasse 26**
**CH-8330 Pfäffikon (Kanton Zürich) (CH)**

(72) Erfinder : **Glocker, Heinz Walter**
**Im Hornsberg 340**
**CH-8448 Uhwiesen (Kanton Zürich) (CH)**

(74) Vertreter : **Bovard, Fritz Albert et al**
**Bovard & Cie. Patentanwälte VSP-Rechtsanwälte**
**Optingenstrasse 16**
**CH-3000 Bern 25 (CH)**

Einrichtung zum Abwägen von Tabakportionen

Die Erfindung betrifft eine Einrichtung nach dem Oberbegriff von Anspruch 1.

In der Werbeschrift Nr. 251-1 « The Automatic Tobacco Weigher » der Firma Focke & Pfuhl, Verden/Aller, ist eine Tabakwaage beschrieben, bei welcher einer Waagschale einer Waage über einen ersten Weg der abzuwägenden Portion eine entsprechende Menge an Tabak aus einem Vorratsbehälter zugeführt wird. Die über den ersten Weg zugeführte Menge an Tabak wird in Abhängigkeit des durch die Waage festgestellten Gewichtes für die nachfolgende Beschickung automatisch eingestellt. Entspricht das durch die Waage festgestellte Gewicht dem Sollwert, so wird eine Klappe an der Waagschale zum Freigeben der abgewogenen Tabakmenge für die Verpackung geöffnet und eine Einstellung der über den ersten Weg zugeführten Menge an Tabak unterbleibt. Liegt das von der Waage festgestellte Gewicht unter dem Sollwert, so wird der Waagschale über einen zweiten Weg, d. h. einer Feindosiervorrichtung, der Fehlbetrag an Tabak aus dem Vorratsbehälter zugeführt und die Menge des über den ersten Weg zugeführten Tabakes erhöht, damit wenn möglich bei der nächsten Wägung der Sollwert schon bei der Zuführung über den ersten Weg erreicht wird.

Liegt das von der Waage festgestellte Gewicht über dem Sollwert, so wird die zu schwere Tabakportion über einen anderen Ausgang aus der Waagschale entfernt, um in den Vorratsbehälter zurückgeführt werden zu können. Weiter wird die Menge des über den ersten Weg der Waagschale zugeführten Tabaks verkleinert, so dass beim nächsten Wägevorgang die über den ersten Weg zugeführte Tabakmenge entweder dem Sollwert entspricht oder darunter liegt.

Neigt der abzuwägende Tabak zur Klumpenbildung, so wird das Sollgewicht sowohl beim Zuführen des Tabakes über den ersten Weg als auch beim Feindosieren über den zweiten Weg öfters überschritten, so dass der Wägevorgang wiederholt und der unmittelbar zuvor abgewogene Tabak wieder in den Vorratsbehälter zurück gegeben werden muss.

Werden die abgewogenen und zu schwer befundenen Tabakrationen nicht dem Vorratsbehälter zurückgeführt, sondern für die Verpackung freigegeben, so entsteht daraus ein finanzieller Verlust, weil die betreffenden Tabakportionen mehr Tabak enthalten als dem Sollwert entspricht.

In der Patentanmeldung FR-A-2 368 022 ist eine Einrichtung zum Abwägen von Tabakportionen beschrieben. Zum Vermeiden der oben beschriebenen Nachteile wird bei der bekannten Einrichtung der Tabak über eine Schüttelrinne einem Zuführrohr und von diesem über eine Grobdosiervorrichtung einer Waagschale zugeführt. Das Ende der Schüttelrinne ist als Rost ausgebildet. Darunter befindet sich eine Auffangrinne für die durch den Rost fallenden feinen Tabakteilchen.

Die Auffangrinne mündet in den Randbereich des Zuführrohres, so dass die feinen Tabakteilchen durch eine seitliche Oeffnung im oberen Bereich des Zuführrohres von einer pneumatischen Vorrichtung angesogen werden können. Die auf diese Weise vom übrigen Tabak abgetrennten feinen Tabakteilchen gelangen zum Feindosieren über eine weitere Schüttelrinne in die Waagschale. Mit dieser bekannten Einrichtung lässt sich eine sehr gute Feindosierung erzielen. Diese Einrichtung weist den Nachteil auf, dass nicht nur feine Tabakteilchen, sondern auch allerfeinste, pulverförmige, d. h. unerwünschte Tabakteilchen in den Feindosierkanal und in die abzuwägende Tabakportion gelangen.

Es ist die Aufgabe der Erfindung, eine Einrichtung zum genauen Abwägen von Tabakportionen zu schaffen, bei welcher Einrichtung gleichzeitig mit dem Wägevorgang der abzuwägende Tabak von allerfeinsten, pulverförmigen Tabakteilchen befreit wird.

Ein weiteres Ziel ist, zu erreichen, dass dem zugeführten Tabak nur diejenige Menge an feinen Tabakteilchen entnommen wird, die zur Erreichung des exakten Abfüllgewichtes notwendig ist.

In der vorher genannten Einrichtung wird diese Aufgabe erfindungsgemäss durch die im kennzeichnenden Teil des Anspruches 1 angeführten Merkmale gelöst.

Die Erfindung ist nachstehend mit Bezugnahme auf die Zeichnung beispielsweise näher erläutert. Es zeigen

Figur 1 die schematische Darstellung eines Ausführungsbeispieles der erfindungsgemässen Einrichtung zum Abwägen von Tabakportionen mit einer Grobdosiervorrichtung und einer Feindosiervorrichtung,

Figur 2 einen Vertikalschnitt durch den oberen Teil der Feindosiervorrichtung,

Figur 3 eine Ansicht der Feindosiervorrichtung von oben,

Figur 4 einen Schnitt gemäss der Linie IV-IV der Figur 3,

Figur 5 die Seitenansicht des oberen Teiles der Feindosiervorrichtung und der Schüttelrinne zum Zuführen des Tabaks von einem Behälter zur Feindosiervorrichtung, teilweise im Schnitt,

Figur 6 die Draufsicht auf die Schüttelrinne und einen Teil der Feindosiervorrichtung,

Figur 7 einen Schnitt entlang der Linie VII-VII der Figur 2 und

Figur 8 einen Querschnitt durch eine andere Ausführung des Unterbodens der Schüttelrinne.

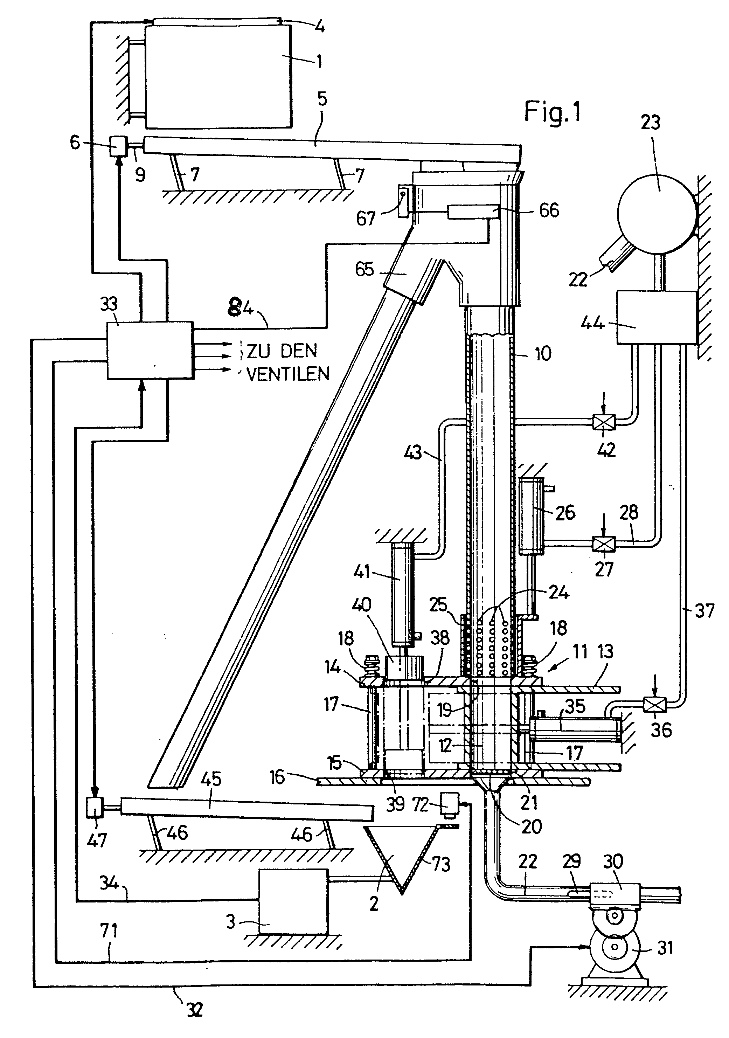

Die Figur 1 zeigt teilweise in rein schematischer Darstellung und teilweise im Schnitt den Aufbau der Einrichtung zum Abwägen von Tabakportionen. Aufgabe dieser Einrichtung ist es, aus einem Vorratsbehälter 1 für Tabak einer Waagschale 2 einer Waage 3 möglichst schnell eine vorbestimmte Tabakportion, z. B. 50 g zuzuführen und die genau abgewogene Menge an Tabak in ein nicht dargestelltes Behältnis zu geben. Zu diesem Zweck wird mittels einer nur teilweise sichtbaren Fördervorrichtung 4, die beispielsweise ein endloses Förderband aufweist, Tabak aus dem Vorratsbehälter 1 in eine Schüttelrinne 5 zugeführt. Die Schüttelrinne 5 ist leicht geneigt und wird durch einen Vibrator 6 in Schwingungen versetzt. Damit die Schüttelrinne 5 schwingen kann, ist sie über Blattfedern 7 mit dem nur schematisch dargestellten Gestell der Einrichtung verbunden. Der Vibrator kann eine mit Wechselstrom gespeiste Spule sein, in die ein ferromagnetischer Anker eintaucht, der über einen Stab 9 mit der Schüttelrinne 5 verbunden ist, oder eine durch einen Motor antreibbare Exzenterscheibe sein, an die der mit der Schüttelrinne verbundene Stab 9 anliegt.

Der innerhalb der Schüttelrinne 5 bezogen auf die Fig. 1 nach rechts geförderte Tabak gelangt teilweise in einen Zuführkanal, der die Form eines Zuführrohres 10 aufweist, und durch dieses Zuführrohr zu einer Grobdosiervorrichtung 11.

Die Grobdosiervorrichtung 11 umfasst eine Dosierkammer 12, die in einem Schlitten 13 angeordnet und zwischen zwei Halteplatten 14 und 15 von einer Füllstellung in eine Entleerstellung und zurück verschiebbar angeordnet ist. Die untere Halteplatte 15 ist starr mit einer nur teilweise dargestellten Grundplatte 16 der Einrichtung verbunden. Die obere Halteplatte 14 wird durch vier Bolzen 17, von denen in der Fig. 1 nur zwei sichtbar sind, gehalten. An jedem die obere Halteplatte 14 durchstossenden Ende der Bolzen 17 ist je eine Schraubenfeder 18 vorgesehen, welche die obere Halteplatte 14 an den Schlitten 13 anpressen.

Der in der Fig. 1 mit ausgezogenen Linien dargestellte Schlitten 13 befindet sich in der Füllstellung, in welcher der Tabak aus dem Zuführrohr 10 und durch eine erste Bohrung 19 in der oberen Halteplatte 14 in die Dosierkammer 12 gelangt. Auf der der Bohrung 19 gegenüberliegenden Seite ist eine mit einem Sieb 20 versehene erste Oeffnung 21 in der unteren Halteplatte 11 angeordnet. Das Sieb 20 verhindert, dass der in die Dosierkammer 12 eingefüllte Tabak aus dieser wieder austritt. Die Oeffnung 21 ist an eine Unterdruckleitung 22 angeschlossen, die ihrerseits mit der Ansaugseite einer Luftpumpe 23 verbunden ist.

Das Ende des Zuführrohres 10, das in die Grobdosiervorrichtung 11 mündet, ist mit einer Anzahl Löcher 24 versehen, die mit einer Hülse 25 verschliessbar sind. Die Hülse 25 ist auf dem Zuführrohr 10 verschiebbar angeordnet und kann mittels eines pneumatischen Antriebszylinders 26 von der in der Fig. 1 dargestellten Stellung in eine Hochstellung gebracht werden, in welcher die Löcher 25 freiliegen. Die Tabakzuführung aus dem Vorratsbehälter 1 mit Hilfe der Fördervorrichtung 4 und der Schüttelrinne 5 wird so eingestellt, dass das vorzugsweise durchsichtige Zuführrohr 10 im Mittel zur Hälfte mit Tabak gefüllt ist. Es sei nun angenommen, dass der Schlitten 13 soeben in die in der Fig. 1 mit ausgezogenen Linien dargestellte Füllstellung verbracht worden ist. Der Tabak im Zuführrohr 10 rutscht unter der Wirkung der Schwerkraft um die Höhe der Dosierkammer 12 nach unten wobei die Absenkbewegung des Tabaks durch den in der Dosierkammer 12 entstehende Unterdruck beschleunigt wird. Gleichzeitig oder kurz nach dem Absinken des Tabaks in die Dosierkammer 12 wird ein Magnetventil 27 in einer Rohrleitung 28 erregt, was bewirkt, dass die Hülse 25 durch den Antriebszylinder 26 angehoben wird, wodurch die Löcher 25 in dem Zuführrohr 10 freigegeben werden. Dies hat zur Folge, dass der Tabak in der Dosierkammer 12 in Abhängigkeit des Unterdruckes in der Unterdruckleitung 22 verdichtet wird. Mit anderen Worten heisst dies, dass das Gewicht des in die Dosierkammer 12 eingefüllten Tabaks vom Unterdruck in der Unterdruckleitung 22 abhängig ist.

Der Unterdruck in der Unterdruckleitung 22 kann mit Hilfe eines Schlitzes 29 in der Unterdruckleitung 22 und einer diese umgebende Manchette 30 eingestellt werden, in dem die Manchette längs der Unterdruckleitung 22 verschoben wird und den Schlitz 29 mehr oder weniger freigibt. Die Verschiebung der Manchette 30 erfolgt mit Hilfe eines Stellmotors 31, der ein entsprechendes Stellsignal über eine Leitung 32 von einer Steuervorrichtung 33 erhält.

Das Gewicht des in die Dosierkammer 12 eingefüllten Tabaks soll möglichst nahe bei vorzugsweise 95 % des abzuwägenden Sollgewichtes liegen. Nach dem Ausstossen des Tabakes aus der Dosierkammer 12 in die Waagschale 2 wird dies durch die Waage 3 festgestellt und der Steuervorrichtung 33 über eine Leitung 34 gemeldet. Die Steuervorrichtung 33 erzeugt dann bei Abweichung gegenüber den genannten 95 % des Gewichtes ein entsprechendes Stellsignal für den Stellmotor 31, so dass die nachfolgende Vordosierung mit einer entsprechenden Korrektur erfolgt.

Mit Hilfe eines pneumatischen Antriebszylinders 35 und nach der Erregung eines Magnetventiles 36 in einer Rohrleitung 37 wird nach dem Füllen der Dosierkammer 12 mit Tabak der Schlitten 13 in die durch strichpunktiertdargestellte Lage, d. h. in die Entleerstellung, verschoben, in der Entleerstellung ist die Dosierkammer 12 bezüglich einer zweiten Bohrung 38 in der oberen Halteplatte 14 und einer zweiten Oeffnung 39 in der unteren Halteplatte 15 ausgerichtet, so dass der in der Dosierkammer 12 enthaltene Tabak mittels eines Kolbens 40 durch die zweite Oeffnung 39 in die darunter angeordnete Waagschale ausgestossen wird, wenn einem pneumatischen Antriebszylinder 41 durch Erregen eines Magnetventils 42 in einer Rohrleitung 43 Druckluft zugeführt wird. Danach wird das Magnetventil 42 entregt, so dass der Kolben 40 in seine Ausgangsstellung zurückkehrt, und anschliessend wird das Magnetventil 36 entregt, so dass der Schlitten 13 bzw. die Dosierkammer 12 in die Füllstellung zurückkehrt.

Die nicht dargestellten Kolben der Antriebszylinder 26, 35 und 41 werden durch die ihnen über die Rohrleitungen 28, 37 bzw. 43 zugeführte Druckluft gegen die Rückführkraft einer nicht dargestellten Feder bewegt. Sobald die Druckluft im Arbeitsraum abgelassen wird, bewegen sich die Kolben unter der Wirkung der nicht dargestellten Federn in ihre Ausgangsstellungen zurück. Die Magnetventile 27, 36 und 42 sind Dreiwegventile, die entweder den Arbeitsraum der Antriebszylinder mit einem Druckgefäss 44 verbinden, wenn die Magnetventile erregt sind, oder mit der Aussenwelt verbunden und die Zuluft vom Druckgefäss sperren, wenn die Magnetventile nicht erregt sind. Das Druckgefäss 44 ist vorzugsweise mit dem Ausgang der Luftpumpe 23 verbunden. Die Magnetventile 27, 36 und 42 werden über nur angedeutete Leitungen von der Steuervorrichtung 33 betätigt.

Wie schon erwähnt, sind die Grösse der Dosierkammer 12 und des Unterdruckes in der Unterdruckleitung 22 so gewählt, dass die durch die Grobdosiervorrichtung 11 in die Waagschale 2 ausgestossene Tabakmenge möglichst genau 95 % des Sollgewichtes der abzuwägenden Tabakportion ist. Die restliche Menge an Tabak wird der Waagschale 2 über eine Feindosiervorrichtung zugeführt, die eine weitere Schüttelrinne 45 umfasst. Die Schüttelrinne 45 ist über Blattfedern 46 beweglich mit dem nur schematisch angedeuteten Gestell der Einrichtung verbunden und wird durch einen Vibrator 47 in Schwingungen versetzt.

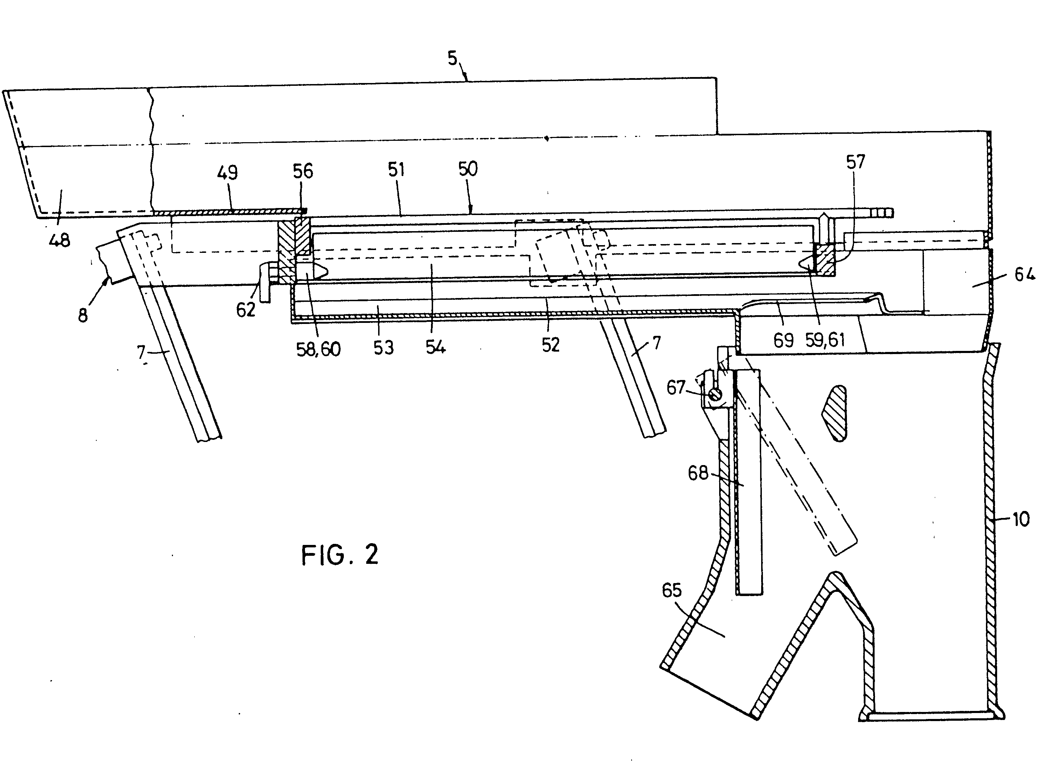

Anhand der Fig. 2 bis 4 soll nun die Feindosiervorrichtung der Einrichtung näher beschrieben werden.

Gemäss Fig. 2 gelangt der aus dem Vorratsbehälter 1 kommende Tabak in den hinteren Teil 48 der Schüttelrinne 5. Im vorderen Teil der Schüttelrinne 5 geht der Boden 49 in einen Rost 50 über. Die einzelnen Stäbe 51 des Rostes 50 weisen einen solchen Abstand voneinander auf, dass der grössere Teil des Tabaks auf dem Rost 50 bleibt und nur feinkörnige Partikel nach unten fallen können. Unter dem Rost 50 ist ein im mittleren Teil 52 W-förmig ausgebildeter Unterboden 53 angeordnet. Zwischen dem Rost 50 und dem Unterboden 53 sind zwei Dosierklappen 54, 55 vorgesehen. Die Klappen sind an ihren Enden in Querträgern 56, 57 des Rostes 50 mit Bolzen 58, 59 ; 60, 61 drehbar gelagert. Die Bolzen 58 und 60 sind mit Verstellhebeln 62, 63 versehen. In der Fig. 2 ist nur die vordere Klappe 54 mit den Bolzen 58 und 59 ersichtlich. Die Bolzen 60 und 61 sind an der hinteren Klappe 55 montiert.

Der vordere Teil 64 der Rinne 5 mündet in das Zuführrohr 10 und den Seitenkanal 65. An der gemäss Fig. 2 hinteren Seite des Seitenkanals 65 ist eine durch eine pneumatische Betätigungsvorrichtung um einen Drehpunkt 67 verstellbare Klappe 68 angeordnet. Die oberen Teile des Zuführkanals 10 und des Seitenkanals 65 berühren den vorderen Teil 64 nicht, damit die Schüttelbewegung nicht auf die ganze Apparatur übertragen wird.

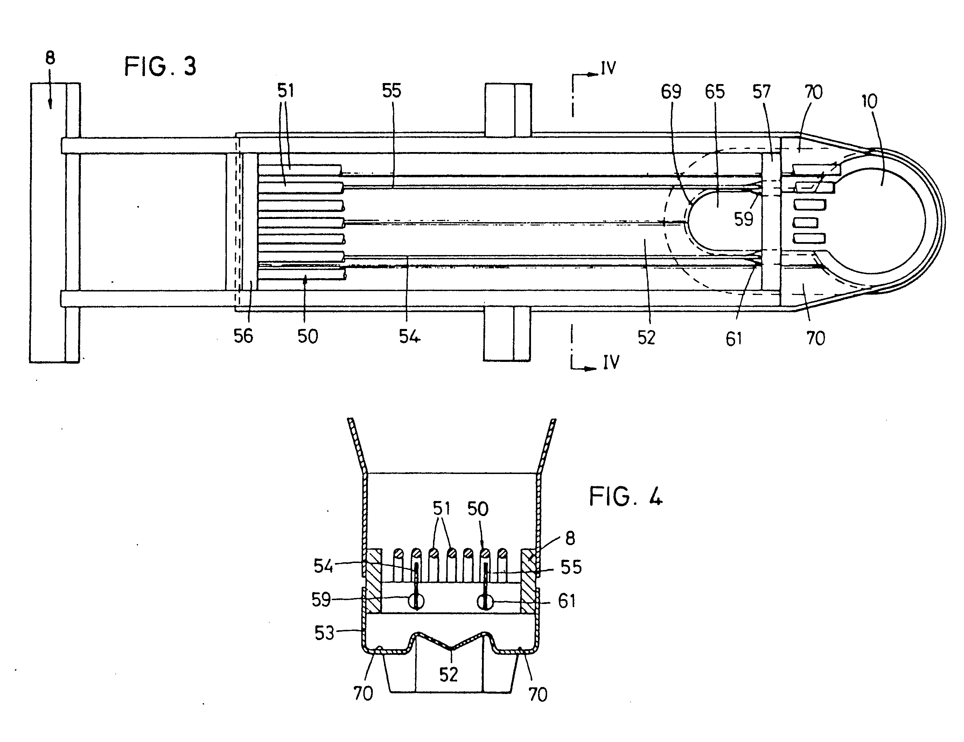

Wie aus Fig. 3 ersichtlich ist, führt der vorne halbkreisförmig ausgebildete Rost 50 bis zum Zuführrohr 10. Der grobe Anteil des Tabaks gelangt also immer in das Zuführrohr 10 und zur gemäss Fig. 1 beschriebenen Grobdosiervorrichtung. Die feinen Tabakteilchen fallen durch den Rost 50 auf den Unterboden 53. Im Bereich der oberen Mündung des Seitenkanals 65 ist der Unterboden 53 mit einer Oeffnung 69 versehen.

Gemäss Fig. 4 besitzt der Unterboden 53 ein im mittleren Teil 52 W-förmiges Profil. Durch entsprechende Verkippung der Dosierklappen 54 und 55 können die herunterfallenden feinen Tabakpartikel eher in den mittleren Bereich 52 oder in die Seitenbereiche 70 des Unterbodens 53 geleitet werden. Der im mittleren Bereich 52 befindliche feine Tabak gelangt durch die Oeffnung 69 in den Seitenkanal 65. Der in die seitlichen Bereiche 70 geleitete feine Tabak gelangt neben der Oeffnung 69 vorbei zum Zuführkanal 10 und damit direkt zur Grobdosiervorrichtung.

Mit den Dosierklappen 54 und 55 wird diejenige Menge des feinkörnigen Tabaks in den mittleren Bereich 52 des Unterbodens geleitet, die etwa zur Feindosierung verwendet werden soll. Die Umlenkklappe 68 leitet in ihrer oberen Stellung auch den Feinanteil aus dem mittleren Bereich 52 direkt zum Zuführrohr 10 und damit zur Grobdosiervorrichtung. Wenn bei der Grobdosierung das Sollgewicht nicht erreicht wurde, so wird die Klappe 68 mit der von der Steuervorrichtung 33 gesteuerten Betätigungseinrichtung 66 über die Leitung 84 so lange in ihre untere Stellung verbracht, bis dass die notwendige Menge der feinen Tabakteilchen über den Seitenkanal 65 und die Schüttelrinne 45 der Waagschale 2 zugeleitet worden ist. Mit den Dosierklappen 54 und 55 kann je nach Tabaksorte die dem Mittelbereich 52 zugeführte Menge reguliert werden.

Die beschriebene Vorrichtung besitzt den Vorteil, dass dem zugeführten Tabak nur diejenige Komponente des Feinanteils entnommen wird, die zur Feindosierung auch gebraucht wird.

Nachdem die in die Waagschale 2 eingegebene Tabakmenge ihr Sollgewicht erreicht hat, wird dies über die Leitung 34 an die Steuervorrichtung 33 gemeldet, die ihrerseits über eine Leitung 71 einen Elektromagneten 72 erregt, welcher eine Klappe 73 an der Waagschale 2 öffnet, so dass die abgewogene Tabakportion in ein nicht dargestelltes Behältnis rutscht. Danach wird ein neuer Wägevorgang eingeleitet.

Die oben beschriebene Feindosiervorrichtung verwendet vorwiegend nur feine Tabakteilchen, die sich zur Feindosierung ausgezeichnet eignen, weil sie einen praktisch konstanten Zuführstrom ergeben. Das Sollgewicht der abgewogenen Tabakportionen wird daher schnell und genau erreicht. Eine Ueberdosierung durch Klumpenbildung ist ausgeschlossen, so dass auf besondere Massnahmen zur Rückführung von überdosierten Tabakportionen in den Vorratsbehälter 1 verzichtet werden kann.

Beim Abwägen von fein geschnittenen Tabaken mit der oben beschriebenen Einrichtung hat sich gezeigt, dass in der Trennvorrichtung zur Trennung der groben von den feinen Tabakteilchen nicht nur feine Tabakteilchen sondern auch bereits in unerwünschten Staub oder Pulver zerfallene allerfeinste Tabakteilchen in den Zuführkanal und zur Feindosiervorrichtung gelangen. Solche pulverförmige Tabakrückstände in den abgewogenen Tabakportionen werden von den Pfeifenrauchern nicht sehr geschätzt.

Es ist daher weiter Aufgabe, die oben beschriebene Einrichtung noch weiter zu verbessern, dass die pulverförmigen Tabakrückstände nicht in die abgewogenen Tabakportionen gelangen.

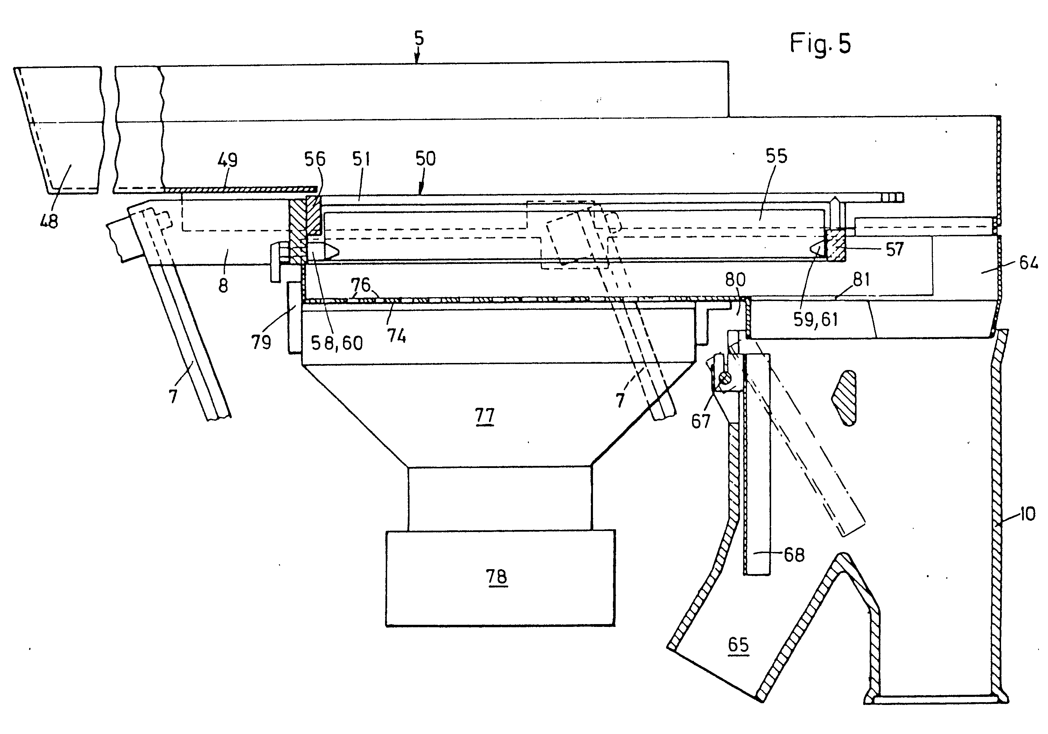

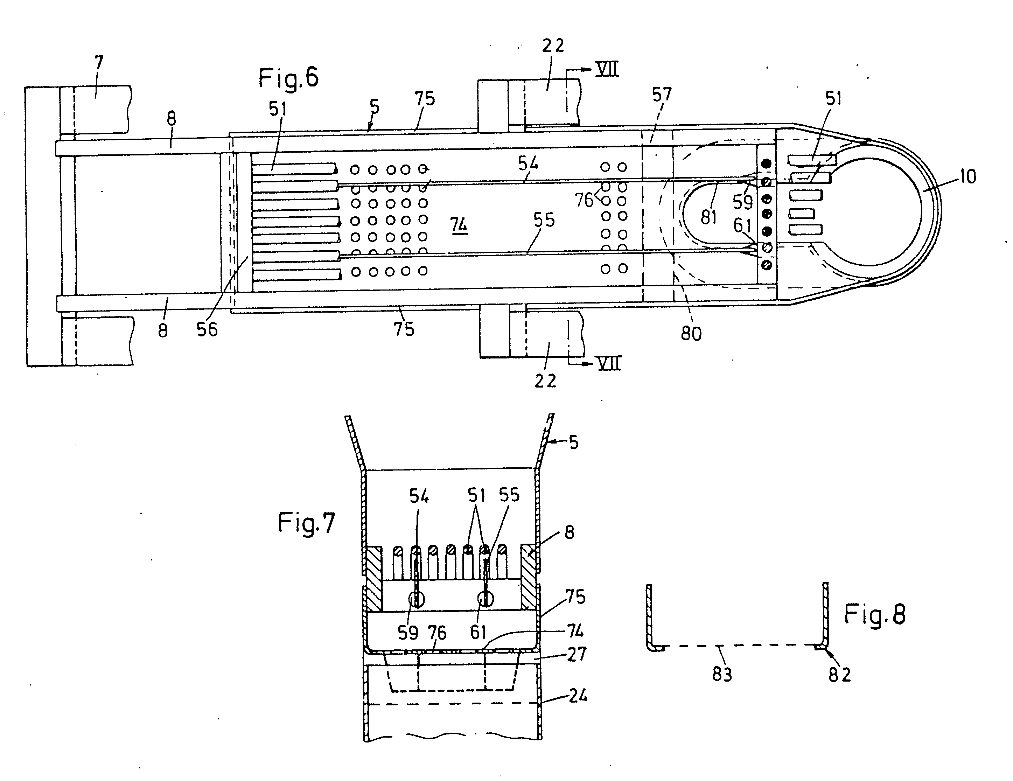

Die Figur 5 zeigt eine Schüttelrinne 5 in deren hinteren Teil 2 der abzuwägende Tabak aus dem nicht dargestellten Vorratsbehälter gelangt. In der Figur 5 sind jene Teile, die identisch mit den entsprechenden Teilen in der Figur 2 sind, mit denselben Begzugszeichen versehen. Der Boden 49 der Schüttelrinne 5 geht im vorderen Teil derselben in den aus in der Längsrichtung der Schüttelrinne 5 angeordnete Stäbe 51 gebildeten Rost 50 über. In der Figur 6, welche nur den vorderen Teil der Schüttelrinne 5 zeigt, sind lediglich die hinteren Enden und teilweise auch die vorderen Enden der Stäbe 51 sichtbar. Unter dem Rost 50 befindet sich eine Bodenplatte 74, die über Seitenwände 75 an den Längsträgern 8 der Schüttelrinne 5 befestigt ist. Die Bodenplatte 74 erstreckt sich im wesentlichen über die ganze Länge des Rostes 50.

Zwischen dem Rost 50 und der Bodenplatte 74 sind die zwei Dosierklappen 54 und 55 angeordnet. Die Dosierklappen sind an ihren Enden in den Querträgern 56 und 57 des Rostes 50 über die Bolzen 58, 59, 60 und 61 schwenkbar gelagert. Die Bolzen 13 und 14 sind mit Verstellhebel 17 versehen. In der Figur 5 ist nur die eine Klappe 55 mit den Bolzen 58 und 59 sichtbar. Die Bolzen 60 und 61 sind an der anderen nicht sichtbaren Dosierklappe 55 befestigt. Der obere Teil der Schüttelrinne 5 mündet in das Zuführrohr 10 und in den Seitenkanal 65. An der bezogen auf die Figur 5 linken Seite des Seitenkanals 65 ist die durch eine nicht dargestellte hydraulische Betätigungsvorrichtung um eine Drehachse 67 verschwenkbare Klappe 68 angeordnet.

Die beiden Längsträger 8 der Schüttelrinne 5 sind über die in der Figur 5 nur teilweise dargestellten Blattfedern 7 an dem nicht gezeichneten Gestell der Einrichtung abgestützt. Die Schüttelrinne 5 ist leicht geneigt und wird durch den nicht dargestellten Vibrator in Schwingung versetzt. Die oberen Teile des Zuführkanals 10 und des Seitenkanals 65 sind nicht mit dem vorderen Teil 64 der Schüttelrinne 1 verbunden, damit die Schüttelbewegung nicht auf das Zuführrohr 10 und den Seitenkanal 65 übertragen wird.

Im hinteren Bereich der Bodenplatte 74, d. h. an den an den Boden 49 der Schüttelrinne 5 anschliessenden Bereich, ist die Bodenplatte 74 mit einer Vielzahl von kleinen Löchern 76 versehen. Unterhalb des Bereiches, der mit den Löchern 76 versehenen Bodenplatte 74 ist ein Trichter 77 zum Auffangen der durch die Löcher 76 fallenden feinsten, praktisch pulverförmigen Tabakteilchen angebracht. Der Trichter 77 mündet in einen Auffangbehälter 78, der an einem Teil des nicht gezeichneten Gestelles aufliegt. Der Trichter kann starr mit dem Zuführrohr 10 bzw. dem Seitenkanal verbunden sein. Es ist jedoch vorteilhafter, wenn der Trichter 77, wie dies in der Figur 5 dargestellt ist, über eine Lasche 79 und einen Winkel 80 an der Bodenplatte 74 befestigt ist. In diesem Fall werden die Schüttelbewegungen der Schüttelrinne 5 auch auf den Trichter 77 übertragen und die darin aufgefangenen pulverförmigen Tabakteilchen können dann besser in den Auffangbehälter 78 gelangen.

Die Figur 6 zeigt, dass die Stäbe 51 des Rostes 50 ungleich lang sind und der Rundung des Zuführrohres 8 angepasst sind, derart, dass die auf dem Rost 50 geförderten gröberen Tabakteile direkt in das Zuführrohr 10 fallen und durch dieses zu der in der Figur 1 dargestellten Grobdosiervorrichtung 11 gelangen. Die feinen und feinsten Tabakteile fallen durch den Rost 50 und zwischen den Dosierklappen 54 und 55 hindurch auf die Bodenplatte 74. Die allerfeinsten, praktisch pulverförmigen Tabakteile fallen durch die Löcher 76 in der Bodenplatte 74 in den Trichter 77 und schliesslich in den Auffangbehälter 78. Auf diese Weise gelangen nur die mittelfeinen Tabakteilchen bis an das vordere Ende der Bodenplatte 74. Der vordere Bereich der Bodenplatte 74, welcher Bereich über den Trichter 77 vorsteht, weist keine Löcher 76 mehr auf. Das über dem Seitenkanal 65 befindliche Ende der Bodenplatte 74 weist eine schlitzförmige Oeffung 81 auf, durch welche die von den pulverförmigen Teilchen befreiten feinen Tabakanteile in den Seitenkanal 65 fallen. Durch den Kanal 65 werden die feinen Tabakanteile der am anderen Ende des Seitenkanals 65 angeordneten, in der Figur 1 dargestellten Schüttelrinne 45 zugeleitet, wenn die Klappe 68 sich in der mit ausgezogenen Strichen in der Figur 5 dargestellten Lage befindet. Nimmt die Klappe die strichpunktiert dargestellte Lage ein, so gelangen auch die feinen Tabakanteile in das Zuführrohr 10.

Mit den Dosierklappen 54 und 55 kann diejenige Menge des feinen Tabakanteiles, die durch die genannte schlitzförmige Oeffnung 81 in den Seitenkanal 65 gelangt, reguliert werden. Wenn die Dosierklappen 54 und 55 bezogen auf die Figur 7, gegeneinander verschwenkt werden, so gelangt eine kleinere Menge des feinen Tabakanteiles auf den mittleren Teil der Bodenplatte 74, von wo aus die feinen Tabakanteile durch die schlitzförmige Oeffnung 81 in den Seitenkanal 65 gelangen. Die auf die Randbereiche der Bodenplatte 74 fallenden kleinen Tabakanteile werden an der schlitzförmigen Oeffnung 81 vorbeitransportiert und fallen in das Zuführrohr 10. Wenn die Dosierklappen 54 und 55 auseinandergeklappt werden, so gelangt eine grössere Menge von feinen Tabakanteilen in den mittleren Teil der Bodenplatte 74 und durch die schlitzförmige Oeffnung 81 in den Seitenkanal 65.

Die Figur 8 zeigt lediglich einen Querschnitt einer anders ausgebildeten Bodenplatte 82. Diese unterscheidet sich gegenüber der in den Figuren 5 bis 8 dargestellten Bodenplatte 74 nur dadurch, dass anstelle der kleinen Löcher 76 ein Sieb 83 vorhanden ist. Das Sieb 83 hat die gleiche Wirkung wie die Vielzahl der Löcher 76, nämlich das Trennen von allfälligen kleinsten, pulverförmigen Tabakteilchen von den feinen Tabakanteilen.

Die oben beschriebene Schüttelrinne 5 besitzt den Vorteil, dass gleichzeitig bei der Trennung der groben und feinen Tabakanteile auch die unterwünschten feinsten, pulverförmigen Tabakanteile sozusagen in einem Arbeitsgang ausgeschieden werden.

Die lichten Abstände zwischen den Stäben 51 des Rostes 50 einerseits und die Grösse der Löcher 76 bzw. der Maschen des Siebes 83 andererseits ist der Art des abzuwägenden Tabakes anzupassen. Die Durchmesser der Löcher 76 und die Maschenweite des Siebes 83 können in einem Bereich von 0,2-2 mm liegen. Je nach Tabaksorte wird eine Lochplatte bzw. ein Sieb mit der gewünschten Grösse ausgewählt.

Die besondere Ausbildung der Bodenplatte 74 bzw. mit den Löchern 76 oder dem Sieb 83 gestattet, insbesondere bei der Behandlung von brüchigem oder sehr fein geschnittenem Tabak, zusätzlich zur ohnehin für die Feindosierung notwendige Trennung des abzuwägenden Tabakes in grobe und feine Tabakanteile noch die Entfernung des unterwünschten feinsten, praktisch pulverförmigen Tabakanteiles, ohne dass hiezu eine zusätzliche Behandlung am Tabak durchgeführt werden muss. Dies ergibt eine Rationalisierung und eine schonende Behandlung des Tabaks.

**Ansprüche**

1. Einrichtung zum Abwägen von Tabakportionen mit einem Behälter zum Aufnehmen des abzuwägenden Tabaks, einer Grobdosiervorrichtung, einem Zuführkanal (10) zum Versorgen der Grobdosiervorrichtung mit Tabak, einer Schüttelrinne zum Zuführen des Tabaks aus dem Behälter in den Zuführkanal, einer Feindosiervorrichtung und einer Waage mit einer Waagschale (2), die im Bereich der Ausgänge der Grobund der Feindosiervorrichtung angeordnet ist, wobei die Feindosiervorrichtung einen Seitenkanal (65) und ein im Bereich des Seitenkanals (65) angeordnetes als Weiche wirkendes Umlenkorgan (68) umfasst und der Seitenkanal (65) zur Waagschale geführt ist, eine als Rost (50) ausgebildete Trennvorrichtung zur Trennung der groben von den feinen Tabakteilchen über den Seitenkanal (65) in den Bereich des Zuführkanals (10) reicht, und eine Sammelvorrichtung (52, 53, 70) für die feinen Tabakteilchen in den Bereich des Seitenkanals (65) oberhalb des Umlenkorganes (68) reicht, dadurch gekennzeichnet, dass das Umlenkorgan (68) in einer ersten Stellung mindestens einen Teil der von der Sammelvorrichtung (52, 53, 70) zugeführten feinen Tabakteilchen in den Seitenkanal (65) und in einer zweiten Stellung zurück in den Zuführkanal (10) leitet, dass die Sammelvorrichtung eine unter dem Rost (50) angeordnete Bodenplatte (74) umfasst, dass in dem den Seitenkanal (65) und den Zuführkanal (10) teilweise überragenden Ende der Bodenplatte eine schlitzförmige Oeffnung (81) vorhanden ist, dass ein sich vom anderen Ende der Bodenplatte gegen das erstgenannte Ende erstreckender Bereich der Bodenplatte zum Befreien der ausgeschiedenen feinen Tabakteilchen von praktisch pulverförmigen Tabakteilchen mit einer Vielzahl von Durchbrüchen (76) versehen ist und dass unterhalb des Bereiches mit den Durchbrüchen ein Trichter (77) zum Auffangen der durch die Durchbrüche fallenden praktisch pulverförmigen Tabakteilchen angeordnet ist.

2. Einrichtung nach Anspruch 1, wobei ein erster Teil der Sammelvorrichtung bis in den Randbereich des Seitenkanals und ein zweiter Teil über den Seitenkanal hinweg in den Zuführkanal geführt ist, dadurch gekennzeichnet, dass unterhalb des Rostes (50) mindestens eine einstellbare Dosierklappe (54, 55) vorgesehen ist, welche die feinen Tabakteilchen auf die beiden Teile (52, 70) der Sammelvorrichtung (53) verteilt.

3. Einrichtung nach Anspruch 2, dadurch gekennzeichnet, dass die Durchbrüche eine Vielzahl Löcher (76) im betreffenden Bereich der Bodenplatte sind und dass der Durchmesser der Löcher 0,2-2 mm beträgt.

4. Einrichtung nach Anspruch 2, dadurch gekennzeichnet, dass die Durchbrüche durch ein im betreffenden Bereich der Bodenplatte eingesetztes Sieb (83) gebildet sind, und dass die Maschenweite des Siebes 0,2-2 mm beträgt.

5. Einrichtung nach einem der Ansprüche 2 bis 4, dadurch gekennzeichnet, dass der Trichter (77) starr mit der Bodenplatte (74) verbunden ist.

6. Einrichtung nach einem der Ansprüche 2 bis 4, dadurch gekennzeichnet, dass der Trichter (77) starr am Zuführkanal (10) befestigt ist.

**Claims**

1. Apparatus for weighing tobacco portions, having a receptacle for receiving the tobacco to be weighed, a coarsemetering device, a feed conduit (10) for supplying the coarsemetering device with tobacco, a shaker trough for conveying the tobacco from the receptacle into the feed conduit, a precision-metering device, and a scale having a scale pan (2) disposed in the vicinity of the outlets of the coarse- and precision-metering devices, the precision-metering device comprising a side conduit (65) and a deflection member (68) disposed in the vicinity of the side conduit (65) and acting as a switch point, and the side conduit (65) leading to the scale pan, a separating device in the form of a grating (50) for separating the coarse tobacco particles from the fine tobacco particles extending over the side conduit (65) into the vicinity of the feed conduit (10), and a collecting device (52, 53, 70) for the fine tobacco particles extending into the vicinity of the side conduit (65) above the deflection member (68), characterized in that the deflection member (68) in a first position directs at least part of the fine tobacco particles conveyed from the collecting device (52, 53, 70) into the side conduit (65) and in a second position back into the feed conduit (10), that the collecting device comprises a bottom plate (74) disposed beneath the grating (50), that there is a slot-shaped opening (81) in the end of the bottom plate partially surmounting the side conduit (65) and the feed conduit (10), that an area of the base plate extending from the other end of the base plate towards the first-mentioned end is provided with a plurality of perforations (76) for freeing the separated fine tobacco particles from substantially powdery tobacco particles, and that under the area with the perforations a hopper (77) is disposed for catching the substantially powdery tobacco particles falling through the perforations.

2. Apparatus according to claim 1, a first part of the collecting device leading into the edge area of the side conduit and a second part leading beyond the side conduit into the feed conduit, characterized in that under the grating (50) there is provided at least one adjustable metering flap (54, 55) which distributes the fine tobacco particles onto both parts (52, 70) of the collecting device (53).

3. Apparatus according to claim 2, characterized in that the perforations are a plurality of holes (76) in the respective area of the base plate, and that the diameter of the holes is 0.2-2 mm.

4. Apparatus according to claim 2, characterized in that the perforations are formed by a sieve (83) inserted in the respective area of the base plate, and that the mesh aperture of the sieve is 0.2-2 mm.

5. Apparatus according to one of the claims 2 to 4, characterized in that the hopper (77) is rigidly connected to the base plate (74).

6. Apparatus according to one of the claims 2 to 4, characterized in that the hopper (77) is rigidly secured to the feed conduit (10).


**Revendications**

1. Dispositif de pesée de portions de tabac, comprenant un récipient pour recevoir le tabac à peser, un agencement de dosage grossier, un conduit d'amenée (10) pour alimenter en tabac l'agencement de dosage grossier, un couloir secouant pour amener le tabac depuis le récipient dans le conduit d'amenée, un agencement de dosage fin et une balance munie d'une coupelle de balance (2) qui est disposée au voisinage des sorties des agencements de dosage fin et grossier, l'agencement de dosage fin comprenant un conduit latéral (65) et un organe de déflexion (68) disposé au voisinage du conduit latéral (65) et agissant comme aiguillage, le conduit latéral (65) menant à la coupelle de balance, un organe séparateur étant établi sous forme de grille (50) pour séparer les particules grossières de tabac des particules fines de tabac, et s'étendant au-dessus du conduit latéral (65) jusqu'au voisinage du conduit d'amenée (10) et un agencement collecteur (52, 53, 70) s'étendant dans le domaine du conduit latéral (65) au-dessus de l'organe de déflexion (68), pour collecter les particules fines de tabac, caractérisé en ce que l'organe de déflexion (68), dans une première position, dirige dans le canal latéral (65) au moins une partie des fines particules de tabac recueillies par l'agencement collecteur (52, 53, 70), et, dans une deuxième position, les retourne dans le conduit d'amenée (10), en ce que l'agencement collecteur comprend une plaque de fond (74) disposée sous la grille (50) en ce qu'une ouverture en forme de fente (81) est établie dans l'extrémité de la plaque de fond qui surmonte partiellement le conduit latéral (65) et le conduit d'amenée (10), en ce qu'une aire de la plaque de fond s'étendant depuis l'autre extrémité de celle-ci vers son extrémité susmentionnée est munie d'une pluralité de perforations (76) pour libérer les fines particules de tabac séparées des particules de tabac substantiellement sous forme de poudre et en ce que, sous cette aire munie de perforations, un entonnoir (77) est disposé pour récolter les particules de tabac substantiellement sous forme de poudre qui tombent à travers les perforations.

2. Dispositif selon la revendication 1, dans lequel une première partie de l'agencement collecteur mène dans le domaine marginal du conduit latéral tandis qu'une deuxième partie de cet agencement collecteur mène jusqu'au conduit d'amenée par-dessus le conduit latéral, caractérisé en ce que, sous la grille (50), se trouve au moins un clapet de dosage ajustable (54, 55), lequel répartit les particules fines de tabac sur les deux parties (52, 70) de l'agencement collecteur (53).

3. Dispositif selon la revendication 2, caractérisé en ce que les perforations consistent en une pluralité de trous (76) dans le domaine correspondant de la plaque de fond, le diamètre de ces trous étant de 0,2 à 2 mm.

4. Dispositif selon la revendication 2, caractérisé en ce que les perforations sont formées par un tamis (83) placé dans le domaine correspondant de la plaque de fond, la dimension de mailles du tamis étant de 0,2 à 2 mm.

5. Dispositif selon l'une des revendications 2 à 4, caractérisé en ce que l'entonnoir (77) est connecté rigidement à la plaque de fond (74).

6. Dispositif selon l'une des revendications 2 à 4, caractérisé en ce que l'entonnoir (77) est fixé rigidement au conduit d'amenée (10).

Fig.1

FIG. 2

0 009 833

FIG. 3

FIG. 4

Fig. 5

Fig.6

Fig.7

Fig.8

0 009 833